# EUROPEAN PATENT SPECIFICATION

(11) **EP 2 722 548 B1**
(45) Date of publication and mention of the grant of the patent: **26.02.2020**
(21) Application number: 12800897.6
(22) Date of filing: 13.06.2012
(51) Int. Cl.: F16C 43/04, B60B 35/02, F16C 19/18, F16C 33/64, F16C 35/06, B60B 27/00

(54) **METHOD FOR PRODUCING WHEEL BEARING DEVICE**
VERFAHREN ZUR HERSTELLUNG EINER RADLAGERVORRICHTUNG
PROCÉDÉ POUR PRODUIRE UN DISPOSITIF DE PALIER DE ROUE

(30) Priority: 14.06.2011 JP 2011132086
(43) Date of publication of application: 23.04.2014
(73) Proprietor: NTN Corporation, Osaka-shi, Osaka 550-0003 (JP)
(72) Inventor: OGATA, Yuuki, Iwata-shi Shizuoka 438-8510 (JP); SAWADA, Tomoaki, Iwata-shi Shizuoka 438-8510 (JP); ISHIYAMA, Masami, Iwata-shi Shizuoka 438-8510 (JP); OKADA, Shinya, Iwata-shi Shizuoka 438-8510 (JP)
(74) Representative: Cohausz & Florack
(86) International application number: PCT/JP2012/065087
(87) International publication number: WO 2012/173133

(56) References cited:
- EP-A1- 1 978 270
- JP-A- S58 121 322
- JP-A- 2007 216 947
- JP-A- 2007 216 947
- JP-A- 2008 089 131
- JP-A- 2008 089 131
- JP-A- 2008 106 904
- JP-B- 63 027 580

## Description

### Field of the Invention

The present invention generally relates to a method for manufacturing a wheel bearing apparatus for rotatably support a wheel of a vehicle such as an automobile, and more particularly to a method for manufacturing a wheel bearing apparatus which can easily and efficiently perform the clearance control of a bearing and stably apply an accurate clearance to the bearing.

### Description of Background Art

Heretofore, a predetermined bearing pre-pressure is applied to the wheel bearing apparatus in order to assure a desirable bearing rigidity. In the wheel bearing apparatus of a so-called third generation type comprising a hub wheel directly formed on its outer circumference with an inner raceway surface and an inner ring press-fitted onto a hub wheel, the control of an amount of bearing pre-pressure has been performed by accurately controlling the abutting surfaces between the hub wheel and the inner ring and by setting the fastening torque (axial force) of a securing nut when fastening the hub wheel and a constant velocity universal joint using the securing nut.

The amount of bearing pre-pressure not only gives influence to the bearing life and bearing rigidity, but also has strong relation to safety running of a vehicle and improvement of fuel consumption. That is, the amount of bearing pre-pressure proportions to the rotational torque and therefore reduction of the amount of bearing pre-pressure can reduce the rotational torque and thus contribute to improvement of fuel consumption. On the contrary, since the bearing inclination angle being a main cause of the bearing rigidity inversely proportions to the bearing pre-pressure, increase of the amount of pre-pressure can improve the bearing rigidity and thus reduce the bearing inclination angle as well as suppress the inclination of a brake rotor caused in running on a curved road. Accordingly it is possible to provide a wheel bearing apparatus which is excellent not only in the bearing life but also in safety and fuel consumption by setting an optimum pre-pressure of bearing.

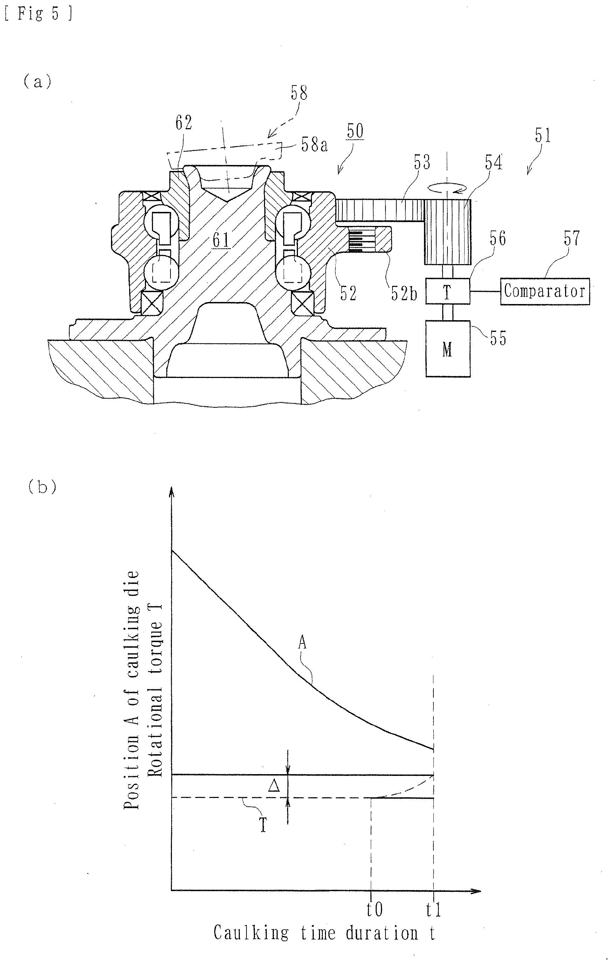

It is known a method shown in Fig. 5(a) for controlling the pre-pressure (negative clearance) of bearings. This pre-pressure monitoring apparatus 51 is adapted to perform the pre-pressure setting by measuring a torque with rotating a bearing when the wheel bearing apparatus is assembled. The pre-pressure monitoring apparatus 51 comprises a gear 53 provided with a rubber roller adapted to be contacted with outer circumference of the outer member 52 at the inner-side of its body mounting flange 52b, a driving gear 54 mated with the gear 53, an electric motor 55 for rotating the driving gear 54, a torque detector 56 including a power meter for detecting the driving torque of the motor 55, and a comparator 57 for comparing the detected rotational torque with a predetermined value.

In the pre-pressure monitoring apparatus 51, the motor 55 is driven to rotate the outer member 52 via the gears 54, 53 and the rotational torque of the outer member 52 is detected by the torque detector 56. Then, the amount of pre-pressure is measured based on the detected rotational torque. When the measured amount of pre-pressure has reached a predetermined value i.e. an amount of pre-pressure suitable for the wheel bearing apparatus 50, a swing motion type caulking apparatus 58 is retracted. Even after the caulking operation has been completed by the caulking apparatus 58, the rotational torque is monitored and it is confirmed that the amount of pre-pressure is proper.

Fig. 5(b) is a graph showing variations of the position A of a caulking die 58a of the swing motion type caulking apparatus 58 and the rotational torque T (ordinate) relative to a time duration "t" of caulking (abscissa). With starting caulking operation by gradually descending the position A of the caulking die 58a, application of pre-pressure to the wheel bearing apparatus is begun at a point of time "t0" and variation of the rotational torque T is also begun. When a magnitude of the variation has reached a predetermined value Δ at a point of time "t1", it is determined that an optimum pre-pressure has been applied to the wheel bearing apparatus 50 and the caulking operation is stopped. Then, the position A of the caulking die 58a is returned to the origin. The pre-pressure monitoring apparatus 51 can perform setting of an amount of pre-pressure with measuring the rotational torque by rotating bearings on assembly of the wheel bearing apparatus 50 (e.g. see Patent Document 1 below).

### Documents of Prior Art

### Patent Document

Patent Document 1: JP 11-44319 A

Document EP1978270 A1 discloses a method for manufacturing a wheel bearing according to the preamble of claim 1.

### Disclosure of the Invention

### Problems to be solved by the Invention

As described above, such a technology of the prior art is structured so that an amount of pre-pressure of bearings can be accurately and stably controlled by detecting rotational torque of bearings by the pre-pressure monitoring apparatus 51, measuring the amount of pre-pressure based on the detected rotational torque, and operating the swing motion type caulking apparatus 58 by determining whether the measured amount of pre-pressure is optimum or not. However, in manufacturing steps of the wheel bearing apparatus having the self-retaining structure, although it is possible to accurately and stably control the amount of pre-pressure of bearings via the rotational torque if each dimension of groove diameters of the outer member 52, the hub wheel 61 and the inner ring 62 press-fitted on the hub wheel 61 is finished within a desirable range, it is difficult to accurately control the amount of pre-pressure if there are variations in dimension of the groove diameters. In addition, since the detection of rotational torque is performed during manufacture of the wheel bearing apparatus by the swing motion type caulking apparatus 58, it is impossible to re-assemble the wheel bearing apparatus by replacing part of its structural elements.

It is, therefore, an object of the present invention to provide a method for manufacturing a wheel bearing apparatus which can easily and efficiently perform the clearance control of the bearing and stably apply an accurate clearance.

### Means for solving problems

For achieving the object mentioned above, there is provided a method for manufacturing a wheel bearing apparatus according to claim 1.

In the wheel bearing apparatus having of the third generation type, since the wheel bearing apparatus is manufactured through steps of measuring a distance Ho from a contacting point between one outer raceway surface of the double row outer raceway surfaces of the outer member and one rolling element of the double row rolling elements to a contacting point between the other outer raceway surface of the double row outer raceway surfaces of the outer member and the other rolling element of the double row rolling elements, a distance Hi from a contacting point between the rolling element and the inner raceway surface of the inner ring to a smaller end face of the inner ring, and a distance Hh from a contacting point between the rolling element and the inner raceway surface of the hub wheel to a shoulder of the hub wheel; comparing a difference Δ H = (Hi + Hh - Ho) with a reference value of a model article, and selecting rolling elements each having an optimum diameter for correcting the difference Δ H between the measured values and the reference values, it is possible to provide a method for manufacturing a wheel bearing apparatus which can easily and efficiently perform the clearance control of the bearing and stably apply an accurate clearance. In addition, since the bearing clearance can be set before assembly of the inner ring, outer member and hub wheel, it is possible to re-assemble the wheel bearing apparatus by replacing part of its structural elements and thus to reduce its manufacturing cost.

It is preferable as defined in claim 2 that the difference Δ H is corrected by calculating the interference of the inner ring with measuring the inner diameter of the inner ring and the outer diameter of the cylindrical portion, and by comparing the calculated value with the reference value of the model article. This makes it possible to change the set value of the bearing clearance in accordance with variation of the bearing clearance caused based on bulge of the inner ring due to its press-fitting.

According to the present invention of claim 3, a measuring jig for the outer member comprises a simulated inner ring and a simulated hub wheel respectively having inner raceway surfaces of same configurations and dimensions as inner raceway surfaces of the inner ring and the hub wheel and simulated rolling elements having same dimensions as the rolling elements, and the distance Ho is measured by contacting the double row outer raceway surfaces of the outer member with the inner raceway surfaces of the simulated inner ring and a simulated hub wheel via the simulated rolling elements. This makes it possible to perform an accurate and stable measurement of dimensions for a long term.

It is preferable as defined in claim 4 that a measuring jig for the inner ring comprises a simulated outer member having an outer raceway surfaces of same configurations and dimensions as the double row outer raceway surfaces of the outer member and simulated rolling elements having same dimensions as the rolling elements, and that the distance Hi is measured by contacting the inner raceway surface of the inner ring with the outer raceway surface of the simulated outer member via the simulated rolling elements. This makes it possible to perform an accurate and stable measurement of dimensions for a long term.

It is preferable as defined in claim 5 that a measuring jig for the hub wheel comprises a simulated outer member having an outer raceway surface of same configurations and dimensions as the double row raceway surfaces of the outer member and simulated rolling elements having same dimensions as the rolling elements, and that the distance Hh is measured by contacting the inner raceway surface of the hub wheel with the outer raceway surface of the simulated outer member via the simulated rolling elements. This makes it possible to perform an accurate and stable measurement of dimensions for a long term.

### Effects of the invention

According to the present invention, it is possible to provide a method for manufacturing a wheel bearing apparatus which can easily and efficiently perform the clearance control of the bearing and stably apply an accurate clearance. In addition, since the bearing clearance can be set before assembly of the inner ring, outer member and hub wheel, it is possible to re-assemble the wheel bearing apparatus by replacing part of its structural elements and thus to reduce its manufacturing cost.

### Brief Description of the Drawings

[Fig.1] A longitudinal-section view of one embodiment of a wheel bearing apparatus of the present invention;
[Fig. 2] (a) An explanatory view showing measuring portions of the inner ring of Fig. 1, and (b) an explanatory view showing a measuring method of the inner ring;
[Fig.3] (a) An explanatory view showing measuring portions of the outer member of Fig. 1, and (b) an explanatory view showing a measuring method of the outer member;
[Fig.4] (a) An explanatory view showing measuring portions of the hub wheel of Fig. 1, and (b) an explanatory view showing a measuring method of the hub wheel;
[Fig.5] (a) A schematic view for explaining the measuring method of the prior art, and (b) a graph showing variations of the caulking position and the rotational torque of a swing motion type caulking apparatus relative to the caulking duration of time.

### One preferable mode for carrying out the Invention

One preferable mode for carrying out the present invention is a method for manufacturing a wheel bearing apparatus comprising an outer member integrally formed on its outer circumference with a body mounting flange to be mounted on a vehicle body and on its inner circumference with double row outer raceway surfaces; an inner member including a hub wheel and an inner ring, the hub wheel being integrally formed on its one end with a wheel mounting flange and on its outer circumference with an inner raceway surface corresponding to one of the double row outer raceway surfaces and having a cylindrical portion axially extending from the inner raceway surface through a shoulder, the inner ring being press-fitted onto the cylindrical portion of the hub wheel via a predetermined interference; and double row rolling elements contained rollably via cages between the inner raceway surfaces of the inner member and the outer raceway surfaces of the outer member wherein the wheel bearing apparatus is manufactured through steps of measuring a distance Ho from a contacting point between one outer raceway surface of the double row outer raceway surfaces of the outer member and one rolling element of the double row rolling elements to a contacting point between the other outer raceway surface of the double row outer raceway surfaces of the outer member and the other rolling element of the double row rolling elements, a distance Hi from a contacting point between the rolling element and the inner raceway surface of the inner ring to a smaller end face of the inner ring, and a distance Hh from a contacting point between the rolling element and the inner raceway surface of the hub wheel to a shoulder of the hub wheel; comparing a difference Δ H = (Hi + Hh - Ho) with a reference value of a model article; and selecting rolling elements each having an optimum diameter for correcting the difference Δ H between the measured values and the reference values; and that the difference Δ H is corrected by calculating the interference of the inner ring with measuring the inner diameter of the inner ring and the outer diameter of the cylindrical portion, and by comparing the calculated value with the reference value of the model article.

### Embodiment

One embodiment of the present invention will be described with reference to the accompanied drawings.

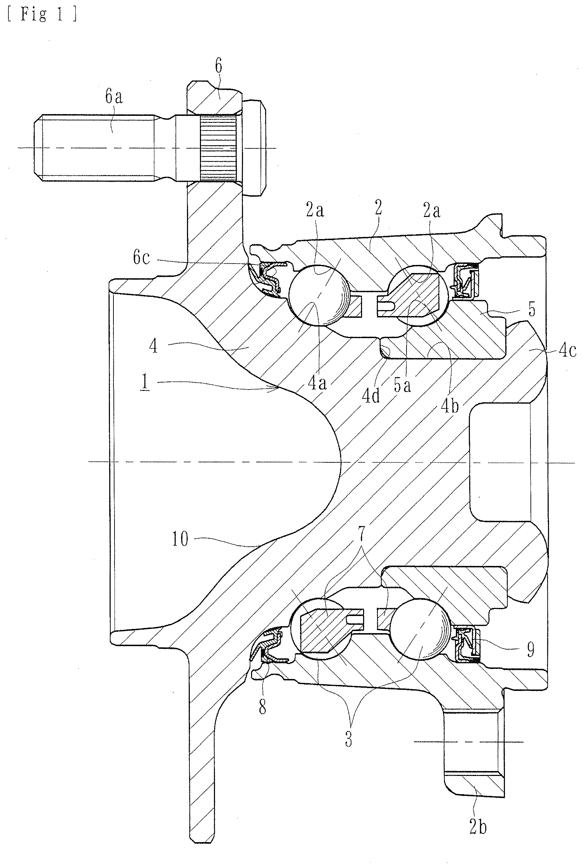

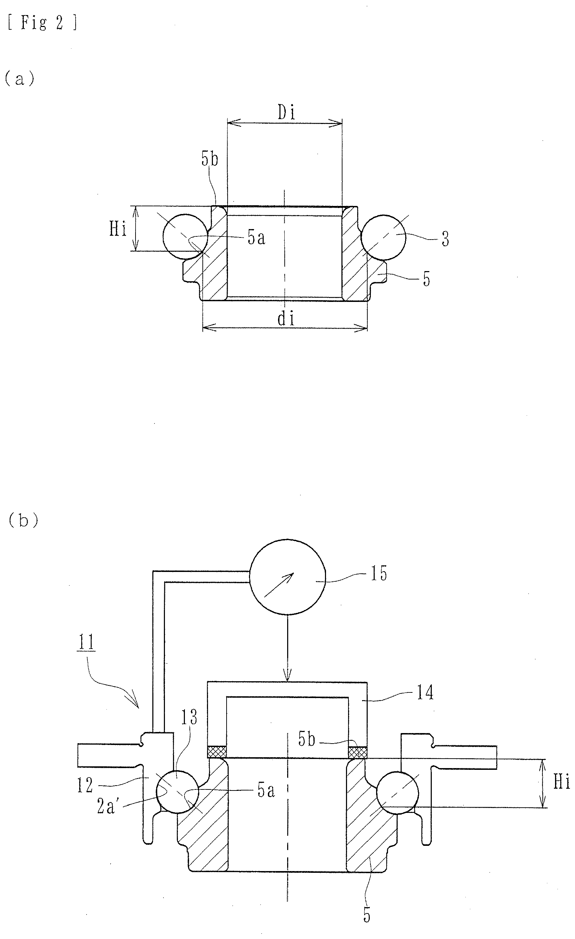

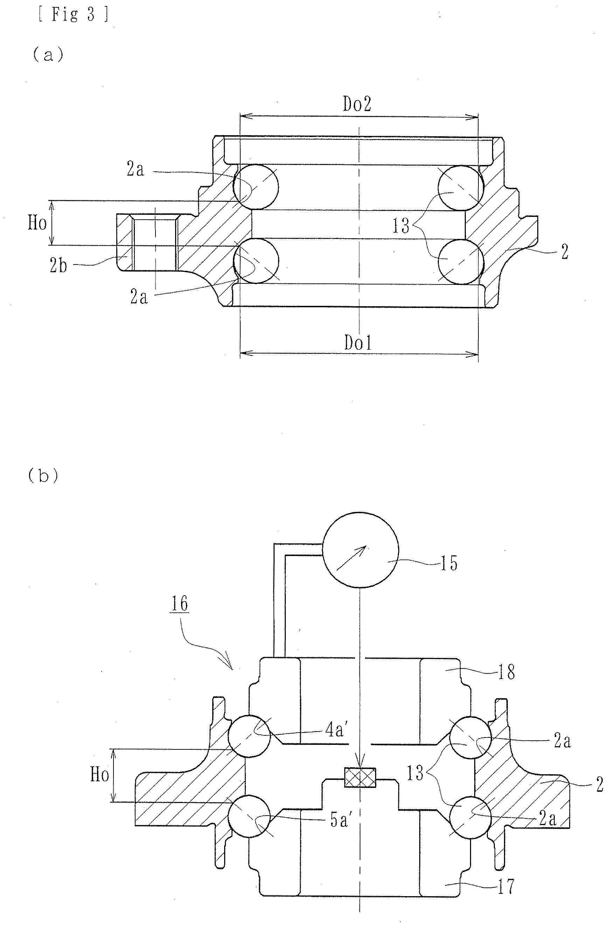

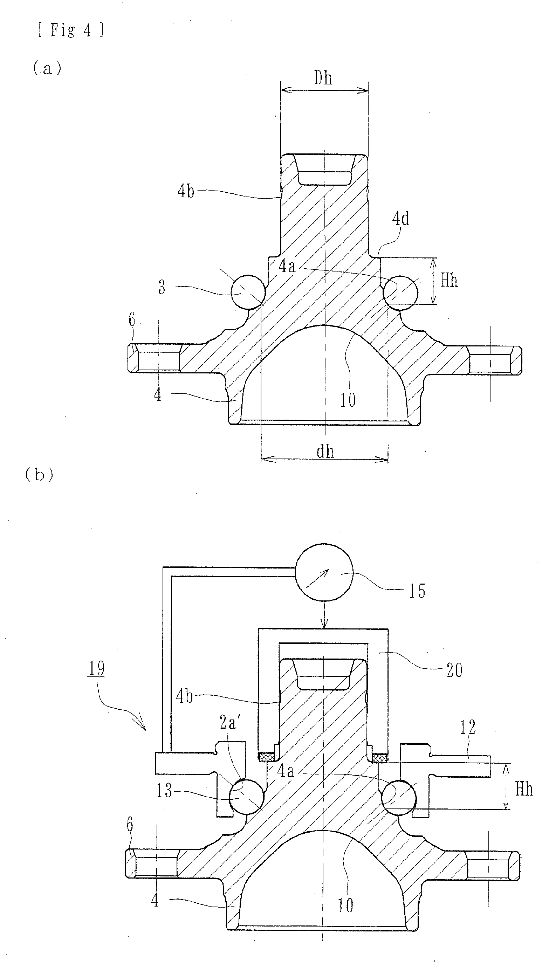

Fig.1 is a longitudinal-section view of one embodiment of a wheel bearing apparatus of the present invention; Fig. 2(a) is an explanatory view showing measuring portions of the inner ring of Fig. 1, and Fig.2(b) is an explanatory view showing a measuring method of the inner ring; Fig.3(a) is an explanatory view showing measuring portions of the outer member of Fig. 1, and Fig.3(b) is an explanatory view showing a measuring method of the outer member; and Fig.4(a) is an explanatory view showing measuring portions of the hub wheel of Fig. 1, and Fig.4(b) is an explanatory view showing a measuring method of the hub wheel. In the description below, an outer-side of a bearing apparatus when it is mounted on a vehicle is referred to as "outer-side" (a left side in Fig. 1), and an inner-side of a bearing apparatus when it is mounted on a vehicle is referred to as "inner side" (a right side in Fig. 1).

The wheel bearing apparatus of Fig. 1 is a so-called "third generation" type for a driven wheel and comprises an inner member 1, an outer member 2, and double row rolling elements (balls) 3, 3 contained between the inner and outer members 1 and 2. The inner member 1 includes the hub wheel 4 and an inner ring press-fitted onto the hub wheel 4.

The hub wheel 4 is integrally formed, on its outer-side end, with a wheel mount flange 6 for mounting a wheel (not shown) and formed, on its outer circumference, with one (i.e. outer-side) inner raceway surface 4a from which axially extends a cylindrical portion 4b. Hub bolts 6a are secured on the wheel mounting flange 6 at its circumferentially equidistant positions.

A cup-shaped recess 10 is formed on the outer-side end of the hub wheel 4. This recess 10 extends from the outer-side end face of the hub wheel 4 to near the bottom of the outer-side inner raceway surface 4a so that a wall thickness of the outer-side portion of the hub wheel 4 is substantially uniform. This makes it possible to solve a contradictory problem such as between reduction of weight and size of the hub wheel 4 and increase of its rigidity.

The inner ring 5 is formed, on its outer circumference, with the other (inner-side) inner raceway surface 5a and press-fitted onto the cylindrical portion 4b of the hub wheel 4 to form a double row angular contact ball bearing of the back-to-back duplex type and axially secured on the hub wheel 4 by a caulked portion 4c formed by plastically deforming the end of the cylindrical portion 4b under a predetermined prestressed condition. The inner ring 5 and rolling elements 3 are formed of high carbon chrome steel such as SUJ2 and dipping hardened to their cores as having a hardness of 58 ∼ 64 HRC.

The hub wheel 4 is made of medium-high carbon steel such as S53C including carbon of 0.40 ∼ 0.80% by weight and is hardened by high frequency induction hardening as having a surface hardness of 58 ∼ 64 HRC over a region from an inner-side base 6c of the wheel mounting flange 6 to the cylindrical portion 4b including the inner raceway surface 4a. The caulked portion 4c is not hardened and kept to hardness after forging. This enables to apply sufficient mechanical strength against the rotary bending load applied to the wheel mounting flange 6, to improve the fretting strength of the cylindrical portion 4b forming the fitting portion of the inner ring 5 and to smoothly perform plastic deformation operation of the caulking portion 4c without causing any micro cracks.

Outer member 2 is integrally formed, on its outer circumference, with body mount flange 2c to be mounted on a knuckle (not shown) and also formed, on its inner circumference, with double row outer-side outer raceway surfaces 2a, 2a opposing to the inner raceway surface 4a of the hub wheel 4 and an inner raceway surface 5a of the inner ring 5. Double row rolling elements 3, 3 are contained between these outer and inner raceway surfaces and rollably held by cages 7.

Outer member 2 is formed of medium-high carbon steel such as S53C including carbon of 0.40 ∼ 0.80 % by weight and is formed, on its inner circumference, with double row outer raceway surfaces 2a, 2a which are hardened by high frequency induction hardening as having a surface hardness of 58 ∼ 64 HRC. Seals 8, 9 are mounted in openings formed between the outer member 2 and the inner member 1 to prevent leakage of lubricating grease sealed within the bearing and entering of rain water or dusts from the outside into the bearing.

Although it is shown here the double row angular contact ball bearing using balls as rolling elements 3, it may be a double row tapered roller bearing using tapered rollers as rolling elements 3.

As shown in Fig. 2(a), according to the present invention, measuring portions of the inner ring 5 are a touch diameter (a diameter between points at which the rolling elements 3 are contacted with the inner raceway surface 5a of the inner ring 5 at a predetermined contacting angle) "di", a touch portion pitch length (a distance from the touch point to the smaller end face 5b of the inner ring 5) "Hi", and an inner diameter "Di" of the inner ring 5. With measuring these portions it is possible to accurately control the dimensions of the inner ring 5 even though there would be variations in configuration of the inner raceway surface 5a.

The measurement of the touch portion pitch length Hi of the inner ring 5 is performed with use of a measuring jig 11 shown in Fig. 2(b). The measuring jig 11 comprises a simulated outer member 12, simulated rolling elements 13 and a pressing jig 14. The touch portion pitch length Hi is measured by a distance measuring instrument 15 such as a dial gage with the simulated outer member 12 being fitted onto the inner ring 5 via the simulated rolling elements 13, with the simulated rolling elements 13 being contacted with the outer raceway surface 2a of the simulated outer member 12 and inner raceway surface 5a of the simulated rolling elements 13 at predetermined measuring pressures, and with the inner ring being rotated. Thus, it is possible to correct micro inclination of the inner ring 5 and configuration errors of the inner raceway surface 5a and to have stable measurements.

As shown in Fig. 3(a), the measuring portions of the outer member 2 are touch diameters Do1, Do2 and a touch portion pitch length Ho. With measuring these portions, it is possible to accurately control dimensions of the outer member 2 even though there would be variations in configuration of the double row outer raceway surfaces 2a, 2a.

The measurement of the touch portion pitch length Ho of the outer member 2 is performed with use of a measuring jig 16 shown in Fig. 3(b). The measuring jig 16 comprises a simulated inner ring 17, simulated hub wheel 18 and simulated rolling elements 13. The touch portion pitch length Ho is measured by a distance measuring instrument 15 such as a dial gage with the simulated inner ring 17 and the simulated hub wheel 18 being fitted into the outer member 2 via the simulated rolling elements 13, with the simulated rolling elements 13 being contacted with the inner raceway surfaces 5a, 4a of the simulated inner ring 17 and the simulated hub wheel 18 and the outer raceway surface 2a, 2a of the simulated outer member 12 at predetermined measuring pressures, and with the outer member being rotated. Thus, it is possible to correct micro inclination of the outer member 2 and configuration errors of the outer raceway surfaces 2a and to have stable measurements.

As shown in Fig. 4(a), the measuring portions of the hub wheel 4 are a touch diameters dh, a touch portion pitch length Hh and an outer diameter Dh of the cylindrical portion 4b. Herein, the interference δ between the cylindrical portion 4b and the inner ring 5 press-fitted thereon is calculated as δ = Dh - Di. With measuring these portions, it is possible to accurately control dimensions of the hub wheel 4 even though there would be variations in configuration of the inner raceway surfaces 4a of the hub wheel 4.

The measurement of the touch portion pitch length (a distance from the touch point to a shoulder 4d of the hub wheel 4) Hh of the hub wheel 4 is performed with use of a measuring jig 19 shown in Fig. 4(b). The measuring jig 19 comprises a simulated outer member 12, simulated rolling elements 13 and a pressing jig 20. The touch portion pitch length Hh is measured by a distance measuring instrument 15 such as a dial gage with the simulated outer member 12 being fitted onto the hub wheel 4 via the simulated rolling elements 13, with the simulated rolling elements 13 being contacted with the outer raceway surface 2a of the simulated outer member 12 and the inner raceway surface 4a of the hub wheel 4 at predetermined measuring pressures, and with the hub wheel being rotated. Thus, it is possible to correct micro inclination of the hub wheel 4 and configuration errors of the inner raceway surfaces 4a and to have stable measurements.

Then, the measured information is inputted to a computer. More particularly, the information of the touch diameter di and the touch portion pitch length Hi of the inner ring 5, the information of the touch diameters Do1, Do2 and the touch portion pitch length Hoof the outer member 2, and the information of the touch diameter dh and touch portion pitch length Hh of the hub wheel 4 are inputted to the computer and each value of them is operated in view of diameters of previously prepared rolling elements 3 and an optimum diameter of a rolling element 3 is selected by these informations. More particularly, rolling elements 3 of classifications comprising previously prepared several groups of diameters are selected based on information relating to the difference of each touch portion pitch length Δ H = (Hi + Hh - Ho) and the interference δ.

That is, it is adjusted so that rolling elements 3 each having a larger diameter are selected when the difference Δ H of each touch portion pitch length is large, and on the contrary rolling elements 3 each having a smaller diameter are selected when the difference Δ H of each touch portion pitch length is small in accordance with variations in the bearing clearance caused based on bulge of the inner ring 5 due to press-fit thereof. With adoption of such a method, it is possible to provide a method for manufacturing a wheel bearing apparatus which can easily and efficiently perform the clearance control of the bearing and stably apply an accurate clearance. In addition, since the bearing clearance can be set before assembly of the inner ring 5, outer member 2 and hub wheel 4, it is possible to re-assemble the wheel bearing apparatus by replacing part of its structural elements and thus to reduce its manufacturing cost.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industry

The present invention can be applied to a wheel bearing apparatus of third generation type irrespective of use for driving wheels or for driven wheels.

### Description of Reference numerals

- 1: inner member
- 2: outer member
- 2a: outer raceway surface
- 2b: body mounting flange
- 3: rolling element
- 4: hub wheel
- 4a, 5a: inner raceway surface
- 4b: cylindrical portion
- 4c: caulked portion
- 4d: shoulder
- 5: inner ring
- 5b: smaller end face
- 6: wheel mounting flange
- 6a: hub bolt
- 6c: inner-side base of wheel mounting flange
- 7: cage
- 8: outer-side seal
- 9: inner-side seal
- 10: recessed portion
- 11, 16, 19: measuring jig
- 12: simulated outer member
- 13: simulated rolling element
- 14, 20: pressing jig
- 15: distance measuring instrument
- 17: simulated inner ring
- 18: simulated hub wheel
- 50: wheel bearing apparatus
- 51: pre-pressure monitoring apparatus
- 52: outer member
- 52b: body mounting flange
- 53: gear
- 54: driving gear
- 55: motor
- 56: torque detector
- 57: comparator
- 58: swing motion type caulking apparatus
- 58a: caulking die
- 59, 60: seal
- 61: hub wheel
- 62: inner ring
- A: position of caulking die
- t, t0, t1: caulking duration of time
- T: rotational torque
- Δ T: amount of torque increase
- Δ: amount of variation of rotational torque
- dh: touch diameter of inner raceway surface of hub wheel
- Dh: outer diameter of cylindrical portion
- di: touch diameter of inner raceway surface of inner ring
- Di: inner diameter of inner ring
- Do1, Do2: touch diameter of outer raceway surface
- Hh: touch portion pitch length of hub wheel
- Hi: touch portion pitch length of inner ring
- Ho: touch portion pitch length of outer member
- δ: interference of inner ring
- Δ H: difference of each touch portion pitch length

## Claims

1. A method for manufacturing a wheel bearing apparatus comprising an outer member (2) integrally formed on its outer circumference with a body mounting flange (2b) to be mounted on a vehicle body and on its inner circumference with double row outer raceway surfaces (2a, 2a); an inner member (1) including a hub wheel (4) and an inner ring (5), the hub wheel (4) being integrally formed on its one end with a wheel mounting flange (6) and on its outer circumference with an inner raceway surface (4a) corresponding to one of the double row outer raceway surfaces (2a, 2a) and having a cylindrical portion (4b) axially extending from the inner raceway surface (4a) through a shoulder, the inner ring (5) being press-fitted onto the cylindrical portion (4b) of the hub wheel (4) via a predetermined interference (δ); and double row rolling elements (3, 3) contained rollably via cages (7) between the inner raceway surfaces (4a, 5a) of the inner member (1) and the outer raceway surfaces (2a, 2a) of the outer member (2) **characterized in that** the wheel bearing apparatus is manufactured through steps of:
measuring a distance Ho from a contacting point between one outer raceway surface (2a) of the double row outer raceway surfaces (2a, 2a) of the outer member (2) and one rolling element (3) of the double row rolling elements (3, 3) to a contacting point between the other outer raceway surface (2a) of the double row outer raceway surfaces (2a, 2a) of the outer member (2) and the other rolling element (3) of the double row rolling elements (3, 3), a distance Hi from a contacting point between the rolling element (3) and the inner raceway surface (5a) of the inner ring (5) to a smaller end face (5b) of the inner ring (5), and a distance Hh from a contacting point between the rolling element (3) and the inner raceway surface (4a) of the hub wheel (4) to a shoulder (4d) of the hub wheel (4), wherein the distance Ho, the distance Hi, and the distance Hh are measured under a condition in which the outer member (2), the inner ring (5), and the hub wheel (4) are rotated, respectively, and wherein the distance Ho, the distance Hi, and the distance Hh are measured with use of measuring jigs (11, 16, 19) comprising simulated members of simulated rolling elements (13), a simulated outer member (12), a simulated inner ring (17), and a simulated hub wheel (18);
comparing a difference Δ H = (Hi + Hh - Ho) with a reference value of a model article, and
selecting rolling elements (3) each having an optimum diameter for correcting the difference Δ H between the measured values and the reference values.

2. A method for manufacturing a wheel bearing apparatus of claim 1 wherein the difference Δ H is corrected by calculating the interference (δ) of the inner ring (5) with measuring the inner diameter (Di) of the inner ring (5) and the outer diameter (Dh) of the cylindrical portion (4b), and by comparing the calculated value with the reference value of the model article.

3. A method for manufacturing a wheel bearing apparatus of claim 1 wherein the measuring jig (16) for the outer member (2) comprises the simulated inner ring (17) and the simulated hub wheel (18) respectively having inner raceway surfaces (17a, 18a) of same configurations and dimensions as inner raceway surfaces (5a, 4a) of the inner ring (5) and the hub wheel (4) and the simulated rolling elements (13) having same dimensions as the rolling elements (3), and wherein the distance Ho is measured by contacting the double row outer raceway surfaces (2a, 2a) of the outer member (2) with the inner raceway surfaces (17a, 18a) of the simulated inner ring (17) and the simulated hub wheel (18) via the simulated rolling elements (13).

4. A method for manufacturing a wheel bearing apparatus of claim 1 wherein the measuring jig (11) for the inner ring (5) comprises the simulated outer member (12) having an outer raceway surfaces (12a) of same configurations and dimensions as the double row outer raceway surfaces (2a, 2a) of the outer member (2) and the simulated rolling elements (13) having same dimensions as the rolling elements (3), and wherein the distance Hi is measured by contacting the inner raceway surface (5a) of the inner ring (5) with the outer raceway surface (12a) of the simulated outer member (12) via the simulated rolling elements (13).

5. A method for manufacturing a wheel bearing apparatus of claim 1 wherein the measuring jig (19) for the hub wheel (4) comprises the simulated outer member (12) having an outer raceway surface (12a) of same configurations and dimensions as the double row raceway surfaces (2a, 2a) of the outer member (2) and the simulated rolling elements (13) having same dimensions as the rolling elements (3), and wherein the distance Hh is measured by contacting the inner raceway surface (4a) of the hub wheel (4) with the outer raceway surface (12a) of the simulated outer member (12) via the simulated rolling elements (13).

## Patentansprüche

1. Verfahren zur Herstellung einer Radlagervorrichtung, die Folgendes umfasst: ein äußeres Element (2), das an seinem Außenumfang in einem Stück mit einem Karosseriemontageflansch (2b) zur Montage an einer Fahrzeugkarosserie und an seinem Innenumfang mit zweireihigen Außenlaufbahnoberflächen (2a, 2a) ausgebildet ist; ein inneres Element (1) mit einer Radnabe (4) und einem inneren Ring (5), wobei die Radnabe (4) an ihrem einen Ende in einem Stück mit einem Radmontageflansch (6) und an ihrem Außenumfang mit einer Innenlaufbahnoberfläche (4a) entsprechend einer der zweireihigen Außenlaufbahnoberflächen (2a, 2a) und mit einem zylindrischen Abschnitt (4b) ausgebildet ist, der sich axial von der Innenlaufbahnoberfläche (4a) durch eine Schulter erstreckt, wobei der innere Ring (5) auf den zylindrischen Abschnitt (4b) der Radnabe (4) mit einer vorbestimmten Interferenz (δ) aufgepresst ist; und zweireihige Wälzelemente (3, 3), die über Käfige (7) zwischen den Innenlaufbahnoberflächen (4a, 5a) des inneren Elements (1) und den Außenlaufbahnoberflächen (2a, 2a) des äußeren Elements (2) rollfähig enthalten sind, **dadurch gekennzeichnet, dass** die Radlagervorrichtung mit den folgenden Schritten hergestellt wird:
Messen einer Distanz Ho von einem Kontaktpunkt zwischen einer Außenlaufbahnoberfläche (2a) der zweireihigen Außenlaufbahnoberflächen (2a, 2a) des äußeren Elements (2) und einem Wälzelement (3) der zweireihigen Wälzelemente (3, 3) zu einem Kontaktpunkt zwischen der anderen Außenlaufbahnoberfläche (2a) der zweireihigen Außenlaufbahnoberflächen (2a, 2a) des äußeren Elements (2) und dem anderen Wälzelement (3) der zweireihigen Wälzelemente (3, 3), einer Distanz Hi von einem Kontaktpunkt zwischen dem Wälzelement (3) und der Innenlaufbahnoberfläche (5a) des inneren Rings (5) zu einer kleineren Endfläche (5b) des inneren Rings (5), und einer Distanz Hh von einem Kontaktpunkt zwischen dem Wälzelement (3) und der Innenlaufbahnoberfläche (4a) der Radnabe (4) zu einer Schulter (4d) der Radnabe (4), wobei die Distanz Ho, die Distanz Hi und die Distanz Hh unter einer Bedingung gemessen werden, bei der das äußere Element (2), der innere Ring (5) und die Radnabe (4) jeweils gedreht werden, und wobei die Distanz Ho, die Distanz Hi und die Distanz Hh mit Hilfe von Messvorrichtungen (11, 16, 19) gemessen werden, die simulierte Elemente von simulierten Wälzelementen (13), ein simuliertes äußeres Element (12), einen simulierten inneren Ring (17) und eine simulierte Radnabe(18) umfassen;
Vergleichen einer Differenz Δ H = (Hi + Hh - Ho) mit einem Referenzwert eines Modellartikels, und
Auswählen von Wälzelementen (3) jeweils mit einem optimalen Durchmesser zum Korrigieren der Differenz Δ H zwischen den Messwerten und den Referenzwerten.

2. Verfahren zur Herstellung einer Radlagervorrichtung nach Anspruch 1, wobei die Differenz Δ H durch Berechnen der Interferenz (δ) des inneren Rings (5) unter Messung des Innendurchmessers (Di) des inneren Rings (5) und des Außendurchmessers (Dh) des zylindrischen Abschnitts (4b) und durch Vergleichen des berechneten Wertes mit dem Referenzwert des Modellartikels korrigiert wird.

3. Verfahren zur Herstellung einer Radlagervorrichtung nach Anspruch 1, wobei die Messvorrichtung (16) für das äußere Element (2) den simulierten inneren Ring (17) und die simulierte Radnabe (18), die jeweils Innenlaufbahnoberflächen (17a, 18a) derselben Konfigurationen und Abmessungen wie die Innenlaufbahnoberflächen (5a, 4a) des inneren Rings (5) und der Radnabe (4) aufweisen, sowie die simulierten Wälzelemente (13) mit denselben Abmessungen wie die Wälzelemente (3) umfasst, und wobei die Distanz Ho durch Kontaktieren der zweireihigen Außenlaufbahnoberflächen (2a, 2a) des äußeren Elements (2) mit den Innenlaufbahnoberflächen (17a, 18a) des simulierten inneren Rings (17) und der simulierten Radnabe (18) über die simulierten Wälzelemente (13) gemessen wird.

4. Verfahren zur Herstellung einer Radlagervorrichtung nach Anspruch 1, wobei die Messvorrichtung (11) für den inneren Ring (5) das simulierte äußere Element (12) mit einer Außenlaufbahnoberfläche (12a) derselben Konfigurationen und Abmessungen wie die zweireihigen Außenlaufbahnoberflächen (2a, 2a) des äußeren Elements (2) und die simulierten Wälzelemente (13) mit denselben Abmessungen wie die Wälzelemente (3) umfasst, und wobei die Distanz Hi durch Kontaktieren der Innenlaufbahnoberfläche (5a) des inneren Rings (5) mit der Außenlaufbahnoberfläche (12a) des simulierten äußeren Elements (12) über die simulierten Wälzelemente (13) gemessen wird.

5. Verfahren zur Herstellung einer Radlagervorrichtung nach Anspruch 1, wobei die Messvorrichtung (19) für die Radnabe (4) das simulierte äußere Element (12) mit einer Außenlaufbahnoberfläche (12a) derselben Konfigurationen und Abmessungen wie die zweireihigen Laufbahnoberflächen (2a, 2a) des äußeren Elements (2) und die simulierten Wälzelemente (13) mit denselben Abmessungen wie die Wälzelemente (3) umfasst, und wobei die Distanz Hh durch Kontaktieren der Innenlaufbahnoberfläche (4a) der Radnabe (4) mit der Außenlaufbahnoberfläche (12a) des simulierten äußeren Elements (12) über die simulierten Wälzelemente (13) gemessen wird.

## Revendications

1. Procédé de fabrication d'un appareil de palier à roue comprenant un élément externe (2) formé de manière intégrée sur sa circonférence externe avec une bride de montage de corps (2b) à monter sur un corps de véhicule et sur sa circonférence interne avec des surfaces de circuit externe à double rangée (2a, 2a) ; un élément interne (1) comprenant un moyeu de roue (4) et un anneau interne (5), le moyeu de roue (4) étant formé de manière intégrée sur son une extrémité avec une bride de montage de roue (6) sur sa circonférence externe avec une surface de circuit interne (4a) correspondant à une des surfaces de circuit externe à double rangée (2a, 2a) et ayant une partie cylindrique (4b) s'étendant axialement de la surface du circuit interne (4a) à travers un épaulement, l'anneau interne (5) étant ajusté par pressage sur la partie cylindrique (4b) du moyeu de roue (4) via une interférence prédéterminée (δ) ; et les éléments de roulement à double rangée (3, 3) contenus de manière roulable via des cages (7) entre les surfaces de circuit interne (4a, 5a) de l'élément interne (1) et les surfaces de circuit externe (2a, 2a) de l'élément externe (2) **caractérisé en ce que** l'appareil de palier à roue est fabriqué par les étapes de :
mesure d'une distance Ho d'un point de contact entre une surface de circuit externe (2a) des surfaces de circuit externe à double rangée (2a, 2a) de l'élément externe (2) et un élément de roulement (3) des éléments de roulement à double rangée (3, 3) à un point de contact entre l'autre surface de circuit externe (2a) des surfaces externes à double rangée (2a,2a) de l'élément externe (2) et l'autre élément de roulement (3) des éléments de roulement à double rangée (3, 3), une distance Hi d'un point de contact entre l'élément de roulement (3) et la surface de circuit interne (5a) de l'anneau interne (5) à une face d'extrémité plus petite (5b) de l'anneau interne (5), et une distance Hh d'un point de contact entre l'élément de roulement (3) et la surface de circuit interne (4a) du moyeu de roue (4) à un épaulement (4d) du moyeu de roue (4), la distance Ho, la distance Hi et la distance Hh étant mesurées dans une condition dans laquelle l'élément externe (2), l'anneau interne (5) et le moyeu de roue (4) sont tournés, respectivement, et la distance Ho, la distance Hi et la distance Hh étant mesurées avec l'utilisation de gabarits de mesure (11, 16, 19) comprenant des éléments simulés d'éléments de roulement simulés (13), un élément externe simulé (12), un anneau interne simulé (17) et un moyeu de roue simulé (18) ;
comparaison d'une différence Δ H = (Hi + Hh - Ho) avec une valeur de référence d'un article modèle, et
la sélection d'éléments de roulement (3) ayant chacun un diamètre optimum pour corriger la différence Δ H entre les valeurs mesurées et les valeurs de référence.

2. Procédé de fabrication d'un appareil de palier à roue selon la revendication 1 selon lequel la différence Δ H est corrigée en calculant l'interférence (δ) de l'anneau interne (5) avec la mesure du diamètre interne (Di) de l'anneau externe (5) et le diamètre externe (Dh) de la partie cylindrique (4b), et en comparant la valeur calculée avec la valeur de référence de l'article modèle.

3. Procédé de fabrication d'un appareil de palier à roue selon la revendication 1 selon lequel le gabarit de mesure (16) pour l'élément externe (2) comprend l'anneau interne simulé (17) et le moyeu de roue simulé (18) respectivement ayant des surfaces de circuit interne (17a, 18a) de mêmes configurations et dimensions que les surfaces de circuit interne (5a, 4a) de l'anneau interne (5) et du moyeu de roue (4) et les éléments de roulement simulés (13) ayant les mêmes dimensions que les éléments de roulement (3), et où la distance Ho est mesurée par mise en contact des surfaces de circuit externe à double rangée (2a, 2a) de l'élément externe (2) avec les surfaces de circuit interne (17a, 18a) de l'anneau interne simulé (17) et de la roue de moyeu simulée (18) via les éléments de roulement simulés (13).

4. Procédé de fabrication d'appareil de palier à roue selon la revendication 1 selon lequel le gabarit de mesure (11) pour l'anneau interne (5) comprend l'élément externe simulé (12) ayant une surface de circuit externe (12a) de mêmes configurations et dimensions que les surfaces de circuit externe à double rangée (2a, 2a) de l'élément externe (2) et les éléments de roulement simulés (13) ayant les mêmes dimensions que les éléments de roulement (3), et la distance Hi étant mesurée par mise en contact de la surface de circuit interne (5a) de l'anneau interne (5) avec la surface de circuit externe (12a) de l'élément externe simulé (12) via les élément de roulement simulés (13).

5. Procédé de fabrication d'appareil de palier à roue selon la revendication 1 selon lequel le gabarit de mesure (19) pour le moyeu de roue (4) comprend l'élément externe simulé (12) ayant une surface de circuit externe (12a) de mêmes configurations et dimensions que les surfaces de circuit à double rangée (2a, 2a) de l'élément externe (2) et les éléments de roulement simulés (13) ayant les mêmes dimensions que les éléments de roulement (3), et la distance Hh étant mesurée par mise en contact de la surface de circuit interne (4a) du moyeu de roue (4) avec la surface de circuit externe (12a) de l'élément externe simulé (12) via les éléments de roulement simulés (13).
